# EUROPEAN PATENT APPLICATION

(11) **EP 2 107 852 A1**
(43) Date of publication of application: **07.10.2009**
(21) Application number: 08865936.2
(22) Date of filing: 19.12.2008
(51) Int. Cl.: H04W 88/02

(54) **MULTI-TERMINAL COMMUNICATION METHOD, SYSTEM AND APPARATUS**

(30) Priority: 25.12.2007 CN 200710301347
(71) Applicant: Huawei Technologies Co., Ltd., Longgang District Shenzhen Guangdong 518129 (CN)
(72) Inventor: YAO, Lizhe Huawei Technologies Co.Ltd.IPROC, Shenzhen Guangdong (CN); DING, Chuansuo c/o Huawei Technologies Co.Ltd., IPROC, Shenzhen (CN); ZHANG, Jie c/o Huawei Technologies Co.Ltd., IPROC, Shenzhen (CN); YANG, Shiqian c/o Huawei Technologies Co.Ltd., IPROC, Shenzhen (CN)
(74) Representative: Kreuz, Georg Maria
(86) International application number: PCT/CN2008/073608
(87) International publication number: WO 2009/082945

(57) **Abstract**

A multi-terminal communication method, system and apparatus are provided. The method includes: receiving a call request originated by a caller to a voice terminal of a callee, where the call request carries a video media identifier; and setting up a voice session between the voice terminal of the callee and the caller and setting up a video session between a video terminal of the callee and the caller according to the video media identifier. With the present invention, a Service Broker Function (SBF) sets up a voice session between the caller and the voice terminal of the callee and a video session between the caller and the video terminal of the callee so that it is unnecessary for data exchanged between the caller and the callee (multiple terminals) to pass through a local server. The burden of the local server is thereby relieved.

## Description

This application claims priority to Chinese Patent Application No.200710301347.X, filed with the Chinese Patent Office on December 25, 2007 and entitled "Method, System and Apparatus for Multi-Terminal Communication", which is incorporated herein by reference in its entirety.

### Field of the Invention

The present invention relates to mobile communication technologies, and in particular, to a method, system and apparatus for multi-terminal communication.

### Background of the Invention

Internet Protocol Television (IPTV) is a television and broadcast service based on IP. With a TV set or personal computer as a display terminal, IPTV provides broadband services including digital broadcast and TV, video, information, interactive community, interactive recreation and entertainment, and electronic commerce over a broadband network. IPTV is characterized by interactivity and real time. An IPTV system includes the streaming service subsystem, program collecting and editing subsystem, storage subsystem and authentication and accounting subsystem. The main contents stored and delivered are streaming media files. The transport of IPTV is based on an IP network. Generally, a local server is set at the network edge and the user terminal may be an IP Set Top Box (STB) with a TV set, or a personal computer. The user terminal is also referred to as "User Equipment (UE)" hereinafter. With the wide deployment and rapid popularity of IPTV services, more and more IPTV based convergent services will arise. For example, a user may bind his fixed line, mobile number or Personal Phone System (PHS) number with IPTV When another user capable of video communication attempts to make a video call to the user while the fixed telephone set or mobile phone of the user does not support video communication, the user can display the video part of the communication via IPTV

When implementing the present invention, the inventor finds that, in the prior art, to engage multiple terminals in one communication session, a Session Transfer Server (STS) is required to communicate with the peer on behalf of the multiple terminals. The voice data and video data sent from the peer are first received by the STS. Then the STS decodes the voice data and video data and sends them to multiple terminals respectively. Likewise, the STS needs to combine data sent by the multiple terminals and send the data to the peer. As a result, the local server where the STS operates is heavily loaded and a lot of local server resources are consumed. The system performance is thereby hindered.

### Summary of the Invention

Embodiments of the invention intend to provide a multi-terminal communication method, system and apparatus so as to resolve the issue in the prior art that the STS of the local server must be engaged to communicate with the peer on behalf of multiple terminals, which causes a heavy burden to the local server and consumes a lot of resources of the local server.

The obj ectives may be achieved through the following technical solution:

A multi-terminal communication method includes:

receiving a call request originated by a caller to a voice terminal of a callee, where the call request carries a video media identifier; and

setting up a voice session between the voice terminal of the callee and the caller and setting up a video session between a video terminal of the callee and the caller according to the video media identifier.

A multi-terminal communication system includes a caller and a Service Broker Function server (SBF), where:

the caller is adapted to originate a call request to a voice terminal of a callee via the SBF, where the call request carries a video media identifier; and

the SBF is adapted to set up a voice session between the voice terminal of the callee and the caller and set up a video session between a video terminal of the callee and the caller according to the video media identifier.

A Service Broker Function server (SBF) includes a request receiving module, a voice session setup module and a video session setup module, where:

the request receiving module is adapted to receive a call request originated by a caller to a voice terminal of a callee, where the call request carries a video media identifier;

the voice session setup module is adapted to set up a voice session between the voice terminal of the callee and the caller; and

the video session setup module is adapted to set up a video session between a video terminal of the callee and the caller according to the video media identifier received by the request receiving module.

The technical solution of the embodiments of the invention provides the following benefits: because the SBF sets up a voice session between the caller and the voice terminal of the callee and a video session between the caller and the video terminal of the callee, it is unnecessary for data exchanged between the caller and the callee (multiple terminals) to pass through a local server. This relieves the burden of the local server. In addition, the embodiments of the invention only require additional signaling exchange between the SBF and the caller/callee. No extra burden is imposed on the SBF.

### Brief Description of the Drawings

FIG. 1 is a signaling flow of a multi-terminal communication method according to a first embodiment of the invention;

FIG. 2 is a signaling flow of UE registration in a multi-terminal communication method according to a second embodiment of the invention;

FIG. 3 is a signaling flow where the video terminal STB of the callee subscribes with the SBF to the session status of the bound voice terminal of the callee in a multi-terminal communication method according to the second embodiment of the invention;

FIG. 4 is a signaling flow of IPTV based multi-terminal communication in a multi-terminal communication method according to the second embodiment of the invention;

FIG. 5 is a signaling flow of IPTV based multi-terminal communication in a multi-terminal communication method according to a third embodiment of the invention; and

FIG. 6 is a schematic drawing showing a structure of a multi-terminal communication system according to an embodiment of the invention.

### Detailed Description of the Embodiments

The present invention is hereinafter described in detail with reference to the accompanying drawings and preferred embodiments.

First Method Embodiment

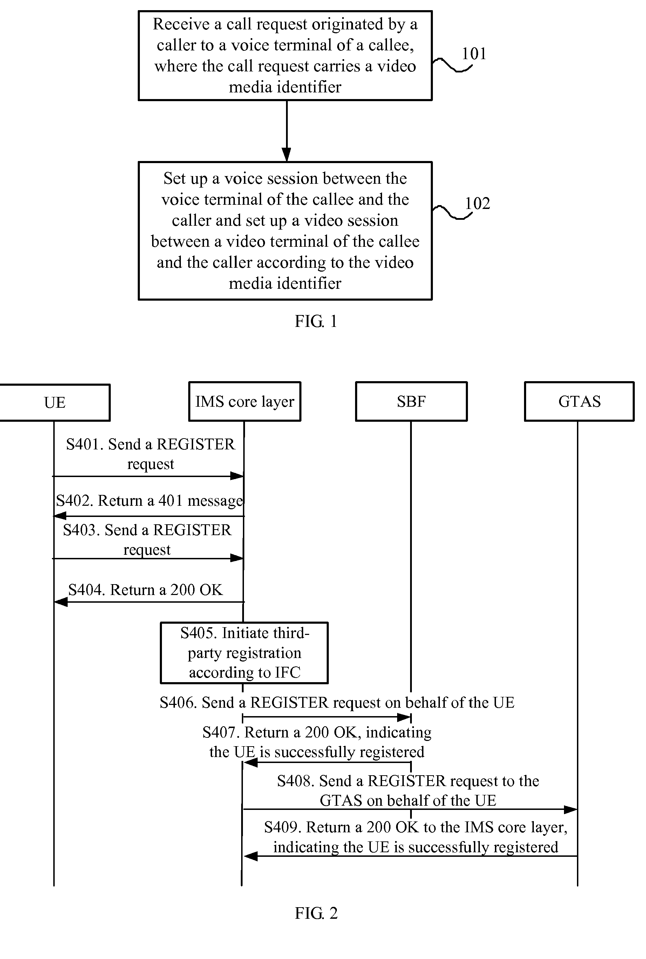

FIG. 1 shows the procedure of a method for multi-terminal communication according to the first embodiment of the invention. The method according to the first embodiment includes the following steps:

Step 101: Receive a call request originated by a caller to a voice terminal of a callee, where the call request carries a video media identifier.

Step 102: Set up a voice session between the voice terminal of the callee and the caller and set up a video session between a video terminal of the callee and the caller according to the video media identifier.

In the first embodiment, a Service Broker Function (SBF) is adopted to set up sessions between the caller and multiple terminals of the callee respectively. Suppose the callee has an STB and a mobile phone. Then the SBF sets up a video session between the STB and the caller and sets up a voice session between the mobile phone and the caller. Therefore, it is unnecessary for data exchanged between the caller and the callee (multiple terminals) to pass through the local server and thus the burden of the local server is relieved. In addition, according to the first embodiment, it is only necessary to add signaling interactions between the SBF and the caller/callee. No extra burden is imposed on the SBF.

Second Method Embodiment

To better explain the technical solution proposed by the first embodiment of the multi-terminal communication method, the second embodiment presents a life scenario, where the multiple terminals of the callee are an STB and a fixed telephone set. The scenario is presented to help explain the technical solution of the first embodiment of the multi-terminal communication method and not intended to limit the application of the method to only such a scenario.

Suppose the STB and fixed telephone set of user A are bound and the STB subscribes to the session status of the fixed telephone set which does not support video reception and display. When user B originates a video call request to the fixed telephone set of user A, user A answers the call and simultaneously, the TV screen displays video data coming from user B and asks whether to receive the video. User A chooses to receive the video and then talks with user B via the fixed telephone set and views the video from user B on the TV screen. If the TV set of user A is not on when user B sends a call request to the fixed telephone set of user A, user A answers the call and user B tells user A that user B can send video data. Then user A can turn on the TV set when an inquiry pops up on the TV screen, asking whether to receive the video of user B. User A chooses to receive the video and then talks with user B via the fixed telephone set while watching the video from user B on the TV screen.

In an IPTV system based on an IP Multimedia Subsystem (IMS), a voice terminal may be an STB, a mobile phone or a fixed telephone set; an IPTV Service Control Function (IPTV SCF) is adapted to manage IPTV related services; the SBF is a key network element of convergent services and works as a common interface between various services such as IPTV and voice services. An IPTV Media Function includes a Media Control part and a Media Delivery part, adapted to control and deliver media data.

In the second embodiment of the multi-terminal communication method, the precondition is that the UE registers successfully with the SBF and a General Telecommunication Application Server (GTAS). The GTAS is equivalent to a call control/processing server in a telephone system and functions to control signaling exchanged between the caller and the callee, such as ringing, off-hook and on-hook signaling. According to the second embodiment of the multi-terminal communication method, a UE registration procedure is proposed.

FIG. 2 is a signaling flow of UE registration according to the second embodiment of the multi-terminal communication method in the present invention. The procedure includes the following steps:

Step S401: The UE sends a REGISTER request to the IMS core layer.

Step S402: The IMS core layer returns a SIP 401 message to the UE. The SIP 401 message is returned via a server to a client, indicating the client is not authorized. (When the UE sends the first request, a SIP 401 message returned means the UE is not authorized. In this case, the UE needs to send another REGISTER request, carrying authentication information of the UE, such as the user name and password. It is a requirement of the Session Initiation Protocol (SIP) for the UE to send two REGISTER requests).

Step S403: The UE sends another REGISTER request to the IMS core layer.

Step S404: The IMS core layer returns a 200 OK to the UE.

Step S405: A third-party registration according to the Initial Filter Criteria (IFC) is initiated. IFC is a part of subscription data stored in a Home Subscriber Server (HSS) and downloaded to the Serving Call Session Control Function (S-CSCF) allocated for the UE when the UE is registered. IFC defines service trigger conditions and destination Application Servers (ASs) according to different priorities. The S-CSCF performs IFC matching when processing a service request from the UE and if the trigger condition is met, triggers the specified AS so that the AS can control the service according to a service logic defined in the AS. Third-party registration refers to a registration automatically initiated by the S-CSCF for the UE according to the IFC of the UE. This means the UE only registers with the IMS core layer but the IMS core layer detects that the UE must also register with a server according to the IFC of the UE and helps the UE to register automatically.

Step S406: The IMS core layer sends a REGISTER request to the SBF on behalf of the UE.

Step S407: The SBF returns a 200 OK to the IMS core layer, indicating the UE is registered successfully.

Step S408: The IMS core layer sends a REGISTER request to the GTAS on behalf of the UE.

Step S409: The GTAS returns a 200 OK to the IMS core layer, indicating the UE is registered successfully.

For easy description, terminals of the callee include an STB and telephone sets. It is necessary to set a binding between the video terminal STB of the callee and the voice terminal (such as a fixed telephone set, a PHS terminal or a mobile phone) and the video terminal STB of the callee must be able to know the session status of the bound voice terminal of the callee. Therefore, the video terminal STB of the callee must send a SUBSCRIBE request to the SBF, requesting the SBF of the callee to notify the video terminal STB of the call request when the SBF receives a call destined for the voice terminal of the callee bound with the STB.

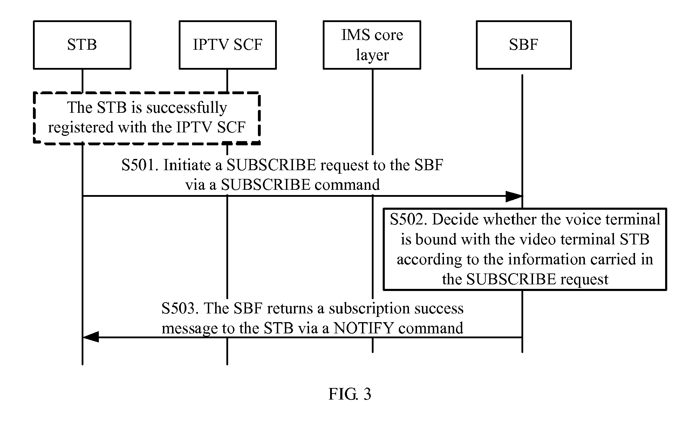

FIG. 3 is a signaling flow where the video terminal STB of the callee subscribes with the SBF to the session status of the voice terminal of the callee bound with the STB in the second embodiment of the invention. In FIG. 3, the STB of the callee is successfully registered with the IPTV SCF.

Step S501: The video terminal STB of the callee sends a SUBSCRIBE request to the SBF via a SUBSCRIBE command which carries information about the voice terminal bound with the STB.

Step S502: The SBF checks whether the voice terminal of the callee is bound with the video terminal STB of the callee according to the voice terminal information carried in the SUBSCRIBE request and if they are bound, the SBF decides to accept the SUBSCRIBE request of the STB of the callee and executes step S503; otherwise, the SBF rejects the SUBSCRIBE request of the STB of the callee.

Step S504: The SBF returns a subscription success message to the STB of the callee via a NOTIFY command. After successful subscription of the STB of the callee, if a caller sends a call request to the voice terminal of the callee bound with the STB of the callee, the SBF also forwards the call request to the STB of the callee.

Fourth Method Embodiment

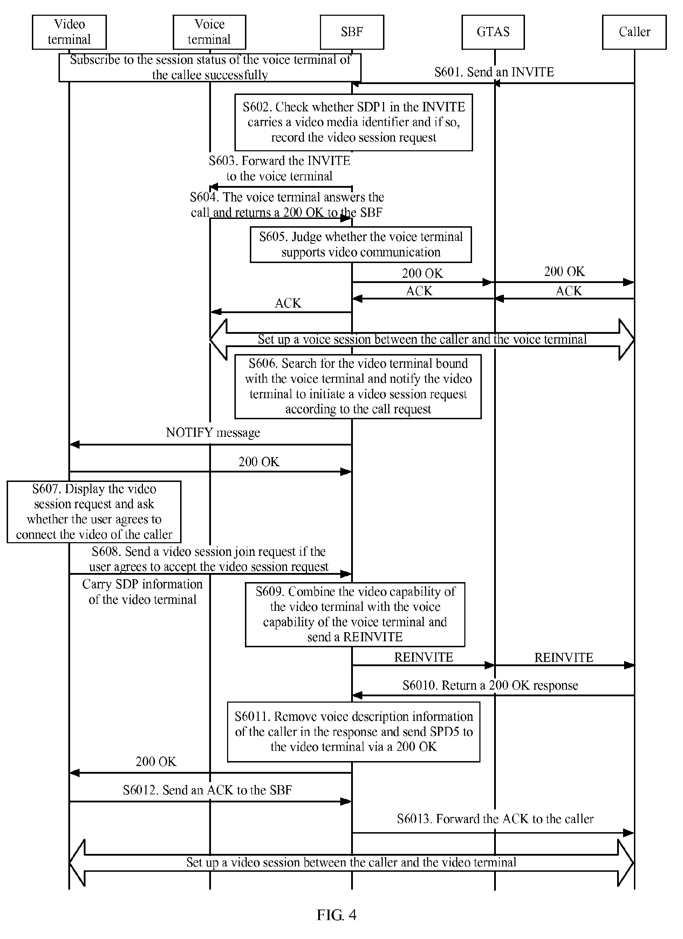

FIG. 4 is a signaling flow of a multi-terminal communication method based on IPTV in the second embodiment of the invention. In FIG. 4, the video terminal STB of the callee has already successfully subscribed with the SBF to the session status of the voice terminal of the callee bound with the STB. In the embodiment, the callee includes at least one voice terminal (such as a fixed telephone set, a PHS terminal and a mobile phone) and one video terminal (such as an STB). The procedure includes the following steps:

Step S601: A caller sends an INVITE message to the SBF, where the Session Description Protocol (SDP) 1 information in the INVITE message carries a video media identifier indicating that the caller is requesting an audio and video session. The SDP1 information also includes capability information of the caller, such as whether the caller supports the video session.

Step S602: Upon reception of the INVITE message from the caller, the SBF checks whether the SDP1 of the INVITE message carries a video media identifier and if so, the SBF records the video session request. The SBF also judges whether the caller supports the video session according to the capability information of the caller in the SDP1 information and if the caller does not support the video session, the SBF will not set up the video session for the caller even though the SDP1 sent by the caller carries a video media identifier.

Step S603: The SBF forwards the INVITE message to the voice terminal of the callee.

Step S604: The voice terminal of the callee answers the call and returns to the SBF a 200 OK which carries SDP2 information of the voice terminal of the callee. The SDP2 information also carries capability information of the voice terminal.

Step S605: The SBF decides whether the voice terminal of the callee supports video communication according to the SDP2 information of the voice terminal of the callee carried in the 200 OK response. If the voice terminal of the callee does not support video communication, the SBF forwards the response of the voice terminal of the callee to the caller and sets up a voice session between the caller and the voice terminal of the callee after the caller receives the response.

Step S606: The SBF searches for the video terminal of the callee bound with the voice terminal of the callee according to the video session request recorded in step S602 and notifies the video terminal of the callee to initiate a video session request according to the INVITE message sent by the caller to the voice terminal of the callee. Specifically, a NOTIFY message (for example, Notify <Request-URI:STB> Body:state=confirmed;call-id;fromtag;totag) may be sent to notify the video terminal of the callee to initiate the video session request.

Step S607: Upon reception of the NOTIFY message from the SBF, the video terminal of the callee displays the video session request on the terminal screen, asking whether the callee agrees to connect the video of the caller. Preferably, a timer is started when a session request is received from the caller. When the timer expires but an instruction of user agreement is not received, the video session request is rejected by default. If the callee does not agree to accept the video session request, the video terminal of the callee does not send a video session join request.

Step S608: If the callee agrees to accept the video session request, the video terminal of the callee sends a video session join request to the SBF. Specifically, the video terminal of the callee sends a video session INVITE message to the SBF and writes a Join header carried in the INVITE message, such as Join:xxx;to-tag=xxx;from-tag=xxx, which notifies the SBF that the video terminal wishes to join an existing session. The INVITE message also carries SDP information (SDP3) of the video terminal of the callee. The SDP3 includes video description information of the video terminal of the callee.

Step S609: Upon reception of the video session INVITE message from the video terminal of the callee, the SBF matches the voice session already existing between the caller and the voice terminal of the callee according to the Join header carried in the INVITE message and combines the video capability of the video terminal of the callee and the voice capability of the voice terminal. Afterwards, the SBF sends a REINVITE message to the caller, requesting the caller to set up a video session. Specifically, the SBF adds the video description information of SDP3 to SDP2 to generate new SDP information, SDP4, and sends the REINVITE message carrying SDP4 to the caller. Thus the caller knows that the peer requesting a video session is the callee with which a voice session is already established.

Step S610: The caller receives the REINVITE and returns to the SBF a 200 OK where the SDP information (SDP5) carries video description information and voice description information of the caller.

Step S611: The SBF receives the 200 OK response from the caller and removes the voice description information of the caller carried in the SDP5 and sends the new SDP5 without the voice description information of the caller to the video terminal of the callee via a 200 OK. If the SBF does not remove the voice description information of the caller, a voice session between the caller and the video terminal of the callee will be set up in addition to the video session between the caller and the video terminal of the callee.

Step S612: The video terminal of the callee receives the INVITE message from the SBF and returns an ACK message.

Step S613: The SBF forwards the ACK from the video terminal of the callee to the caller so as to set up a video session between the caller and the video terminal of the callee.

In the foregoing embodiment, the video terminal of the callee sets up a video session with the caller under the control of the SBF so that the voice terminal of the callee that does not support video reception is able to transfer the video session with the caller to the video terminal of the callee bound with the voice terminal of the callee. The SBF only needs to set up the video session between the caller and the video terminal of the callee. This is unlike the prior art, where the SBF has to communicate with the caller on behalf of the multiple terminals of the callee. Therefore, the method according to the embodiment of the invention does not add to the burden of the SBF but effectively enables communication between multiple terminals and the caller.

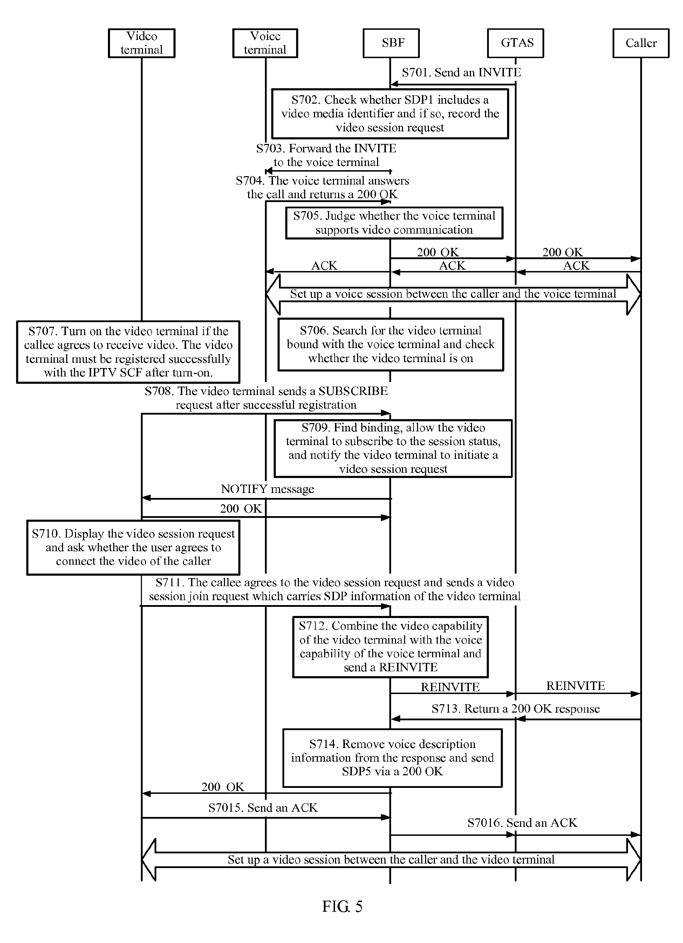

FIG. 5 is a signaling flow of an IPTV based multi-terminal communication method according to the third embodiment of the invention. As shown in FIG. 5, when the caller originates a session request, the video terminal of the callee is not online. The SBF sends an indication to the voice terminal of the callee, instructing the callee to turn on the video terminal of the callee. After the video terminal of the callee is turned on, the video terminal sends a SUBSCRIBE request to the SBF to subscribe to the session status of the voice terminal of the callee. After the subscription is successful, the SBF sets up a video session between the caller and the video terminal of the callee so as to transfer the video session with the caller to the video terminal of the callee bound with the voice terminal of the callee.

Step S701: The caller sends an INVITE message to the SBF. The SDP1 information of the INVITE message carries a video media identifier, indicating that the caller is requesting an audio and video session instead of only an audio session. The SDP1 information also includes capability information of the caller, such as whether the caller supports the video session.

Step S702: Upon reception of the INVITE message from the caller, the SBF checks whether the SDP1 of the INVITE message carries a video media identifier and if so, the SBF records the video session request. The SBF also judges whether the caller supports the video session according to the capability information of the caller in the SDP1 information and if the caller does not support the video session, the SBF will not set up the video session for the caller even though the SDP1 sent by the caller carries a video media identifier.

Step S703: The SBF forwards the INVITE message to the voice terminal of the callee.

Step S704: The voice terminal of the callee answers the call and returns to the SBF a 200 OK which carries SDP2 information of the voice terminal of the callee. The SDP2 information also carries capability information of the voice terminal of the callee.

Step S705: The SBF decides whether the voice terminal of the callee supports video communication according to the SDP2 information of the voice terminal of the callee carried in the 200 OK response. If the voice terminal of the callee does not support video communication, the SBF forwards the response of the voice terminal of the callee to the caller and sets up a voice session between the caller and the voice terminal of the callee after the caller receives the response.

Step S706: The SBF searches for the video terminal of the callee bound with the voice terminal of the callee according to the video session request recorded in step S702 and checks whether the video terminal of the callee is on. In this embodiment of the invention, the video terminal is off and therefore the SBF instructs the callee to turn on the video terminal via the voice terminal of the callee.

Step S707: The callee hears the indication of the SBF and turns on the video terminal of the callee if agreeing to accept the video request of the caller. After the video terminal of the callee is turned on, the video terminal must first successfully register with the IPTV SCF.

Step S708: After the video terminal of the callee is successfully registered, the video terminal sends a SUBSCRIBE request to the SBF, requesting to subscribe to the session status of the bound voice terminal of the callee.

Step S709: The SBF receives the SUBSCRIBE request from the video terminal of the callee and checks whether the video terminal of the callee is bound with the voice terminal of the callee. If they are bound, the SBF allows the video terminal of the callee to subscribe to the session status of the voice terminal of the callee. The SBF also notifies the video terminal of the callee to initiate a video session request. Specifically, a NOTIFY message (for example, Notify <Request-URI:STB> Body:state=confirmed;call-id;fromtag;totag) may be sent to notify the video terminal of the callee to initiate the video session request.

Step S710: Upon reception of the NOTIFY message from the SBF, the video terminal of the callee displays the video session request on the terminal screen, asking whether the callee agrees to connect the video of the caller. Preferably, a timer is started when a session request is received from the caller. When the timer expires but an instruction of user agreement is not received, the video session request is rejected by default. If the callee does not agree to accept the video session request, the video terminal of the callee does not send a video session join request.

Step S711: If the callee agrees to accept the video session request, the video terminal of the callee sends a video session join request to the SBF. Specifically, the video terminal of the callee sends a video session INVITE message to the SBF and writes a Join header, such as Join:xxx;to-tag=xxx;from-tag=xxx, which notifies the SBF that the video terminal wishes to join an existing session. The INVITE message also carries SDP information (SDP3) of the video terminal of the callee. The SDP3 includes video description information of the video terminal of the callee.

Step S712: Upon reception of the video session INVITE message from the video terminal of the callee, the SBF matches the voice session already existing between the caller and the voice terminal of the callee according to the Join header carried in the INVITE message and combines the video capability of the video terminal of the callee and the voice capability of the voice terminal. Afterwards, the SBF sends a REINVITE message to the caller, requesting the caller to set up a video session. Specifically, the SBF adds the video description information of SDP3 to SDP2 to generate new SDP information, SDP4, and sends the REINVITE message carrying SDP4 to the caller. Thus the caller knows that the peer requesting a video session is the callee with which a voice session is already established.

Step S713: The caller receives the REINVITE and returns to the SBF a 200 OK where the SDP information (SDP5) carries video description information and voice description information of the caller.

Step S714: The SBF receives the 200 OK response from the caller and removes the voice description information of the caller carried in the SDP5 and sends the new SDP5 without the voice description information of the caller to the video terminal of the callee via a 200 OK. If the SBF does not remove the voice description information of the caller, a voice session between the caller and the video terminal of the callee will be set up in addition to the video session between the caller and the video terminal of the callee.

Step S715: The video terminal of the callee receives the INVITE message from the SBF and returns an ACK message.

Step S716: The SBF forwards the ACK from the video terminal of the callee to the caller so as to set up a video session between the caller and the video terminal of the callee.

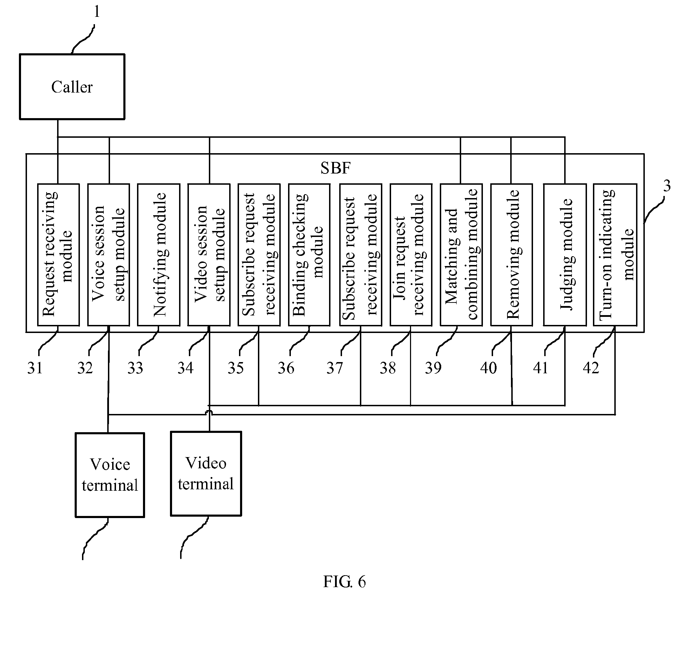

FIG. 6 is a schematic drawing showing the structure of a multi-terminal communication system based on IPTV according to an embodiment of the invention. The system includes a caller 1 and an SBF 3. The caller 1 originates a call request to a voice terminal 21 of a callee via the SBF3. The call request carries a video media identifier. The SBF 3 is adapted to: set up a voice session between the voice terminal 21 of the callee and the caller 1, notify a video terminal 22 of the callee to initiate a video session request according to the video media identifier, and set up a video session between the video terminal 22 of the callee and the caller 1.

The SBF 3 includes a request receiving module 31, a voice session setup module 32, a notifying module 33 and a video session setup module 34. The request receiving module 31 is adapted to receive the call request originated by the caller 1 to the voice terminal 21 of the callee, where the call request carries a video media identifier; the voice session setup module 32 is adapted to set up a voice session between the voice terminal 21 of the callee and the caller 1; the notifying module 33 is adapted to notify the video terminal 22 of the callee to initiate a video session request to the caller according to the video media identifier carried in the call request; the video session setup module 34 is adapted to set up a video session between the video terminal 22 of the callee and the caller 1.

The SBF 3 further includes a subscribe request receiving module 35, a binding checking module 36 and a subscribe responding module 37. The subscribe request receiving module 35 is adapted to receive a SUBSCRIBE request initiated by the video terminal 22 of the callee, where the SUBSCRIBE request carries an identifier of the voice terminal 21 of the callee requested by the video terminal 22 of the callee; the binding checking module 36 is adapted to check whether the voice terminal 21 of the callee is bound with the video terminal 22 of the callee according to the identifier of the voice terminal 21 of the callee; the subscribe responding module 37 is adapted to return a subscription success response to the video terminal 22 of the callee after the binding checking module 36 determines that the voice terminal 21 of the callee is bound with the video terminal 22 of the callee.

The SBF 3 may further include a join request receiving module 38, a matching and combining module 39 and a removing module 40. The join request receiving module 38 is adapted to receive a video session join request sent by the video terminal 22 of the callee, which requests to join the voice session between the voice terminal 21 of the callee and the caller 1 and carries video capability description information of the video terminal 22 of the callee; the matching and combining module 39 is adapted to: match the video terminal 22 of the callee to the voice session between the caller 1 and the voice terminal 21 of the callee according to the video session join request, combine the video capability description information of the video terminal 22 of the callee with the voice capability description information of the voice terminal 21 of the callee, and send a REINVITE message to the caller 1; the removing module 40 is adapted to remove the voice part from a 200 OK message upon reception of the 200 OK message and set up a video session between the video terminal 22 of the callee and the caller 1.

The SBF 3 may further include a judging module 41 and a turn-on indicating module 42. The judging module is adapted to judge whether the video terminal 22 of the callee bound with the voice terminal 21 of the callee is online after the request receiving module 31 receives the call request originated by the caller to the voice terminal 21 of the callee, where the call request carries a video media identifier; the turn-on indicating module 42 is adapted to send an indication to the voice terminal 21 of the callee when the judging module 41 determines that the video terminal 22 of the callee is not online, instructing the callee to turn on the video terminal 22 of the callee.

In this embodiment of the invention, the SBF can set up a voice session between the caller and the voice terminal of the callee and a video session between the caller and the video terminal of the callee so that it is unnecessary for data exchanged between the caller and the callee (multiple terminals) to pass through a local server. This relieves the burden of the local server. In addition, this embodiment of the invention only requires additional signaling exchange between the SBF and the caller/callee. No extra burden is imposed on the SBF.

According to the preceding descriptions, those skilled in the art may understand that embodiments of the present invention can be implemented by software on a necessary hardware platform or by hardware only. In most cases, the former is preferred. Based on such understanding, the essence of the technical solution of the present invention, or contributions to the prior art by the solution may be represented by a software product, which may be stored in a computer-readable storage medium, such as a Read-Only Memory/Random Access Memory (ROM/RAM), a magnetic disk, and a compact disk. The software product includes a number of instructions that enable a computer device (which may be a personal computer, a server or a network device) to execute the method according to the embodiments of the invention.

Although the invention has been described through preferred embodiments, the invention is not limited to such embodiments. It is apparent that those skilled in the art can make various modifications and variations to the invention without departing from the spirit and scope of the invention. The invention is intended to cover the modifications and variations provided that they fall in the scope of protection defined by the claims or their equivalents.

## Claims

1. A multi-terminal communication method, comprising:
receiving a call request originated by a caller to a voice terminal of a callee, wherein the call request carries a video media identifier; and
setting up a voice session between the voice terminal of the callee and the caller and setting up a video session between a video terminal of the callee and the caller according to the video media identifier.

2. The method of claim 1, further comprising: providing the video terminal of the callee with session status of the voice terminal of the callee.

3. The method of claim 1, before the step of setting up the video session between the video terminal of the callee and the caller according to the video media identifier, further comprising:
notifying the video terminal of the callee to initiate a video session request to the caller according to the video media identifier; and
receiving the video session request initiated by the video terminal of the callee to the caller.

4. The method of claim 2, wherein the step of providing the video terminal of the callee with the session status of the voice terminal of the callee comprises:
receiving a SUBSCRIBE request initiated by the video terminal of the callee, wherein the SUBSCRIBE request carries an identifier of the voice terminal of the callee requested by the video terminal of the callee; and
checking whether the voice terminal of the callee is bound with the video terminal of the callee according to the identifier of the voice terminal of the callee and returning a subscription success message to the video terminal of the callee after deciding that the voice terminal of the callee is bound with the video terminal of the callee.

5. The method of claim 4, wherein the SUBSCRIBE request initiated by the video terminal of the callee is:
a SUBSCRIBE request initiated by the video terminal of the callee to a Service Broker Function, SBF, via a SUBSCRIBE command; and
the step of returning a subscription success message to the video terminal of the callee comprises:
a subscription success message returned to the video terminal of the callee via a NOTIFY command.

6. The method of claim 1, further comprising: registering the voice terminal of the callee successfully.

7. The method of claim 1, wherein the step of setting up the video session between the video terminal of the callee and the caller according to the video media identifier comprises:
receiving from the video terminal of the callee a video session join request which requests to join the voice session between the voice terminal of the callee and the caller , wherein the video session join request carries video capability description information of the video terminal of the callee;
matching the video terminal of the callee to the voice session between the caller and the voice terminal of the callee according to the video session join request, combining the video capability description information of the video terminal of the callee with voice capability description information of the voice terminal of the callee, and sending a REINVITE request to the caller; and
removing voice capability description information from a 200 OK upon reception of the 200 OK from the caller and setting up the video session between the video terminal of the callee and the caller.

8. The method of claim 7, wherein the step of requesting to join the voice session between the voice terminal of the callee and the caller comprises:
deciding that the video terminal of the callee requests to join the voice session between the voice terminal of the callee and the caller according to a Join header written by the video terminal of the callee.

9. The method of claim 7, wherein the video capability description of the video terminal of the callee comprises video reception capability information of the video terminal of the callee, or video reception capability information of the video terminal of the callee and video transmission capability information of the video terminal of the callee.

10. The method of claim 1, before the step of setting up the video session between the video terminal of the callee and the caller according to the video media identifier, further comprising:
deciding that the video terminal of the callee is not online and sending an indication to the voice terminal of the callee to instruct the callee to turn on the video terminal of the callee.

11. The method of claim 10, after the step of sending the indication to the voice terminal of the callee to indicate the callee to turn on the video terminal of the callee, further comprising:
providing the video terminal of the callee with session status of the voice terminal of the callee after the video terminal of the callee is turned on.

12. A multi-terminal communication system, comprising a caller and a Service Broker Function, SBF, wherein:
the caller is adapted to originate a call request to a voice terminal of a callee via the SBF, wherein the call request carries a video media identifier; and
the SBF is adapted to set up a voice session between the voice terminal of the callee and the caller and set up a video session between a video terminal of the callee and the caller according to the video media identifier.

13. A Service Broker Function, SBF, comprising a request receiving module, a voice session setup module, and a video session setup module, wherein:
the request receiving module is adapted to receive a call request originated by a caller to a voice terminal of a callee, wherein the call request carries a video media identifier;
the voice session setup module is adapted to set up a voice session between the voice terminal of the callee and the caller; and
the video session setup module is adapted to set up a video session between a video terminal of the callee and the caller according to the video media identifier received by the request receiving module.

14. The SBF of claim 13, further comprising a notifying module, adapted to notify the video terminal of the callee to initiate a video session request to the caller according to the video media identifier carried in the call request received by the request receiving module.

15. The SBF of claim 13, further comprising a subscribe request receiving module, a binding checking module and a subscribe responding module, wherein:
the subscribe request receiving module is adapted to receive a SUBSCRIBE request initiated by the video terminal of the callee, wherein the SUBSCRIBE request carries an identifier of the voice terminal of the callee requested by the video terminal of the callee;
the binding checking module is adapted to check whether the voice terminal of the callee is bound with the video terminal of the callee according to the identifier of the voice terminal of the callee; and
the subscribe responding module is adapted to return a subscription success message to the video terminal of the callee after the binding checking module decides that the voice terminal of the callee is bound with the video terminal of the callee.

16. The SBF of claim 13, further comprising a join request receiving module, a matching and combining module and a removing module, wherein:
the join request receiving module is adapted to receive from the video terminal of the callee a video session join request which requests to join the voice session between the voice terminal of the callee and the caller and carries video capability description information of the video terminal of the callee;
the matching and combining module is adapted to: match the video terminal of the callee to the voice session between the caller and the voice terminal of the callee according to the video session join request, combine the video capability description information of the video terminal of the callee with voice capability description information of the voice terminal of the callee, and send a REINVITE request to the caller; and
the removing module is adapted to: remove voice capability description information from a 200 OK upon reception of the 200 OK from the caller and set up the video session between the video terminal of the callee and the caller.

17. The SBF of claim 13, further comprising a judging module and a turn-on indicating module, wherein:
the judging module is adapted to judge whether the video terminal of the callee is online; and
the turn-on indicating module is adapted to send an indication message to the voice terminal of the callee when the judging module decides that the video terminal of the callee is not online, instructing the callee to turn on the video terminal of the callee.
